# EUROPEAN PATENT APPLICATION

(11) **EP 4 160 251 A1**
(43) Date of publication of application: **05.04.2023**
(21) Application number: 21200528.4
(22) Date of filing: 01.10.2021
(51) Int. Cl.: G01S 7/02, G01S 7/40, G01S 7/282, G01S 13/56

(54) **SYSTEM AND METHOD FOR FACILITATING DETECTING AN EXTERNAL OBJECT**

(71) Applicant: NXP B.V., 5656 AG Eindhoven (NL)
(72) Inventor: TERTINEK, Stefan, 5656AG Eindhoven (NL); VAN SINDEREN, Jan, 5656AG Eindhoven (NL)
(74) Representative: Krott, Michel

(57) **Abstract**

In accordance with a first aspect of the present disclosure, a system is provided for facilitating detecting an external object, the system comprising: at least one radar device configured to transmit one or more radar signals; a controller configured to control said radar device; wherein the controller is configured to cause the radar device to operate in a first mode in which the radar device transmits a first radar signal for determining one or more communication channel characteristics; wherein the controller is further configured to cause the radar device to operate in a second mode in which the radar device transmits a second radar signal, wherein one or more properties of the second radar signal are based on the communication channel characteristics determined when the radar device operates in the first mode. In accordance with a second aspect of the present disclosure, a corresponding method is conceived for facilitating detecting an external object. In accordance with a third aspect of the present disclosure, a computer program is provided for performing said method.

## Description

### TECHNICAL FIELD

The present disclosure relates to a system for facilitating detecting an external object. Furthermore, the present disclosure relates to a corresponding method for facilitating detecting an external object, and to a computer program for carrying said method.

### BACKGROUND

Radar-based detection systems are able to detect external objects by transmitting radar signals which are reflected by said objects. For instance, a radar device may transmit a signal which is reflected by a human being moving in a particular manner. Subsequently, the reflected signal may be received by the radar device, thereby resulting in a detection of the moving human being. In this way, a kicking movement toward a trunk may be detected, for example. In some examples, such a radar-based detection system may be used to assist a smart access system.

### SUMMARY

In accordance with a first aspect of the present disclosure, a system is provided for facilitating detecting an external object, the system comprising: at least one radar device configured to transmit one or more radar signals; a controller configured to control said radar device; wherein the controller is configured to cause the radar device to operate in a first mode in which the radar device transmits a first radar signal for determining one or more communication channel characteristics; wherein the controller is further configured to cause the radar device to operate in a second mode in which the radar device transmits a second radar signal, wherein one or more properties of the second radar signal are based on the communication channel characteristics determined when the radar device operates in the first mode.

In one or more embodiments, the controller is further configured to optimize a configuration of the radar device when the radar device operates in the first mode, wherein said configuration is optimized for determining the communication channel characteristics.

In one or more embodiments, optimizing said configuration includes selecting an optimal value of at least one of the following parameters: a number of frames for transmission, a number of symbols per frame, a code sequence for said symbols, a pulse shape, a pulse repetition rate, a frame duration, a transmission power level, a carrier frequency, a receiver performance level.

In one or more embodiments, the controller is configured to determine the communication channel characteristics by analyzing one or more channel impulse responses received by the radar device in response to the transmitted first radar signal.

In one or more embodiments, the controller is configured to analyze the channel impulse responses to determine at least one of the following communication channel characteristics: a clutter-to-noise ratio, a number of reflections, a power level of the strongest one of said reflections, an interference power level.

In one or more embodiments, the controller is further configured to optimize a configuration of the radar device when the radar device operates in the second mode, wherein said configuration is optimized for detecting the external object.

In one or more embodiments, optimizing said configuration includes selecting an optimal value of at least one of the following parameters: a transmission power level, a frame duration, a frame repetition rate, a pulse repetition rate, a pulse width.

In one or more embodiments, the controller is configured to perform channel sensing on multiple channel frequencies and to cause the radar device to transmit the second radar signal on a specific one of said channel frequencies, wherein said specific one of the channel frequencies has the most suitable communication channel characteristics for transmitting the second radar signal.

In one or more embodiments, the controller is configured to cause the radar device to operate in the first mode at regular intervals and/or before each attempt to detect the external object.

In one or more embodiments, the radar device is an ultra-wideband communication device configured to operate in a radar mode.

In accordance with a second aspect of the present disclosure, a method is conceived for facilitating detecting an external object, the method comprising: causing, by a controller, at least one radar device to operate in a first mode in which the radar device transmits a first radar signal for determining one or more communication channel characteristics; causing, by said controller, the radar device to operate in a second mode in which the radar device transmits a second radar signal, wherein one or more properties of the second radar signal are based on the communication channel characteristics determined when the radar device operates in the first mode.

In one or more embodiments, the controller optimizes a configuration of the radar device when the radar device operates in the first mode, wherein said configuration is optimized for determining the communication channel characteristics.

In one or more embodiments, the controller determines the communication channel characteristics by analyzing one or more channel impulse responses received by the radar device in response to the transmitted first radar signal.

In one or more embodiments, the controller optimizes a configuration of the radar device when the radar device operates in the second mode, wherein said configuration is optimized for detecting the external object.

In accordance with a third aspect of the present disclosure, a computer program is provided, comprising executable instructions which, when executed by a controller, cause said controller to perform a method of the kind set forth.

### DESCRIPTION OF DRAWINGS

Embodiments will be described in more detail with reference to the appended drawings, in which:
Fig. 1 shows an illustrative embodiment of a system for facilitating detecting an external object;
Fig. 2 shows an illustrative embodiment of a method for facilitating detecting an external object;
Fig. 3A shows an illustrative embodiment of operational phases of a radar-based detection system;
Fig. 3B shows another illustrative embodiment of operational phases of a radar-based detection system;
Fig. 4 shows another illustrative method for facilitating detecting an external object;
Fig. 5 shows an illustrative embodiment of a measured IQ signal;
Fig. 6 shows an illustrative embodiment of radar configuration parameters.

### DESCRIPTION OF EMBODIMENTS

As mentioned above, radar-based detection systems are able to detect external objects by transmitting radar signals which are reflected by said objects. For instance, a radar device may transmit a signal which is reflected by a human being moving in a particular manner. Subsequently, the reflected signal may be received by the radar device, thereby resulting in a detection of the moving human being. In this way, a kicking movement toward a trunk may be detected, for example. In some examples, such a radar-based detection system may be used to assist a smart access system.

In particular, in ultra-wideband (UWB) smart access systems a radar sensor can assist a UWB ranging device to make an access procedure more convenient for a user. For example, a vehicle may operate a radar sensor behind the rear bumper and automatically open the trunk when detecting that a user performs a kicking motion towards the sensor and when a legitimate key fob is within the vehicle's proximity. The latter may require that the key fob has a predefined distance to the vehicle and that the key fob has successfully performed an authorization process with the vehicle. To reduce system cost the same UWB device can operate in both a radar and a ranging mode. Alternatively, the radar sensor may be based on a technology different from UWB. For such a kick sensor the radar detection performance strongly depends on the environment (i.e., the channel condition) and may be impacted by reflections from nearby static objects (static clutter), reflections from undesired moving targets (dynamic clutter), and wireless interference from other devices operating in the proximity and in the same frequency (coexistence).

To guarantee a specified detection probability and user experience the radar device (i.e., the radar sensor) is typically configured for the best performance, for example for the best signal-to-noise ratio (SNR). However, configuring the radar device for the best device performance under all circumstances will significantly increase the power consumption of a radar-based detection system.

Now discussed are a system for facilitating detecting an external object, a corresponding method for facilitating detecting an external object, and a corresponding computer program, which may achieve a reduced power consumption of the radar device or radar devices included in said system.

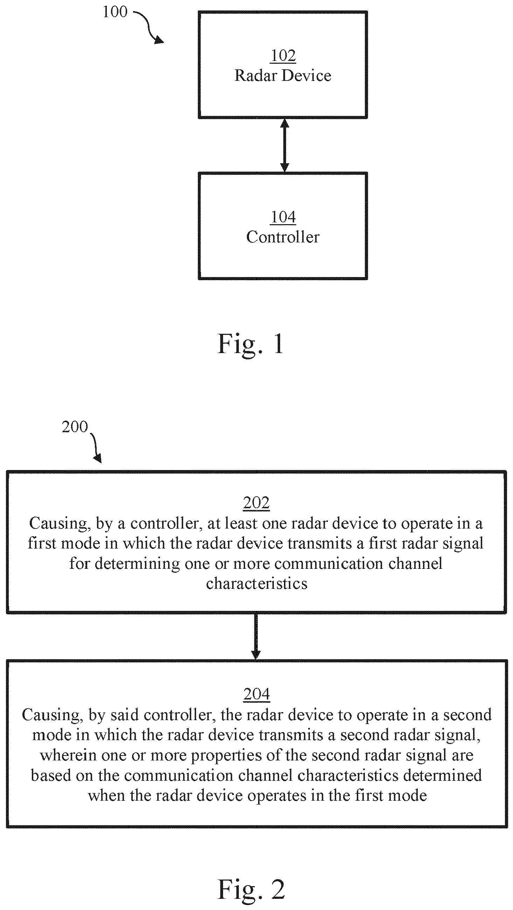

**Fig. 1** shows an illustrative embodiment of a system 100 for facilitating detecting an external object. The system 100 includes at least one radar device 102 and a controller 104 which are operatively coupled to each other. The radar device 102 is configured to transmit one or more radar signals. Furthermore, the controller 104 is configured to control the radar device 102. More specifically, the controller 104 is configured to cause the radar device 102 to operate in a first mode in which the radar device 102 transmits a first radar signal for determining one or more communication channel characteristics. For example, the transmission of the first radar signal may enable the controller 104 to determine said communication channel characteristics by analyzing a reflection of the first radar signal, in particular by analyzing one or more channel impulse responses received by the radar device in response to the transmitted first radar signal. In addition, the controller 104 is configured to cause the radar device 102 to operate in a second mode in which the radar device 102 transmits a second radar signal, wherein one or more properties of the second radar signal are based on the communication channel characteristics determined when the radar device 102 operates in the first mode. In this way, the power consumption of the radar device 102 may be reduced. More specifically, since the properties of the second radar signal are based on the communication channel characteristics, the power consumption may be regulated. For instance, under favorable conditions (e.g., when the communication channel is not significantly impacted by interference) a weaker second radar signal may be transmitted, compared to a scenario with less favorable conditions.

In one or more embodiments, the controller is further configured to optimize a configuration of the radar device when the radar device operates in the first mode, wherein said configuration is optimized for determining the communication channel characteristics. In this way, the determination of the communication channel characteristics is facilitated. In particular, the properties of the first radar signal may be influenced by configuring the radar device, in such a way that the reflection of said first radar signal provides a suitable indication of the condition of the communication channel. In a practical implementation, optimizing said configuration includes selecting an optimal value of at least one of the following parameters: a number of frames for transmission, a number of symbols per frame, a code sequence for said symbols, a pulse shape, a pulse repetition rate, a frame duration, a transmission power level, a carrier frequency, a receiver performance level.

In one or more embodiments, the controller is configured to determine the communication channel characteristics by analyzing one or more channel impulse responses received by the radar device in response to the transmitted first radar signal. In this way, the determination of the communication channel characteristics is further facilitated. In particular, the channel impulse responses may provide a suitable indication of the condition of the communication channel. In a practical implementation, the controller is configured to analyze the channel impulse responses to determine at least one of the following communication channel characteristics: a clutter-to-noise ratio, a number of reflections, a power level of the strongest one of said reflections, an interference power level.

In one or more embodiments, the controller is further configured to optimize a configuration of the radar device when the radar device operates in the second mode, wherein said configuration is optimized for detecting the external object. By optimizing the configuration of the radar device, the properties of the second radar signal may be influenced in such a way that the likelihood of a correct detection of the external object is increased. In a practical implementation, optimizing said configuration includes selecting an optimal value of at least one of the following parameters: a transmission power level, a frame duration, a frame repetition rate, a pulse repetition rate, a pulse width.

In one or more embodiments, the controller is configured to perform channel sensing on multiple channel frequencies and to cause the radar device to transmit the second radar signal on a specific one of said channel frequencies, wherein said specific one of the channel frequencies has the most suitable communication channel characteristics for transmitting the second radar signal. In this way, since the second radar signal is transmitted under the most favorable conditions, the likelihood of a correct detection of the external object may be further increased. Furthermore, in one or more embodiments, the controller is configured to cause the radar device to operate in the first mode at regular intervals and/or before each attempt to detect the external object. In this way, the channel conditions may be determined sufficiently often or when it is most needed.

In a practical implementation, the radar device is an ultra-wideband communication device configured to operate in a radar mode. In this way, the system cost may be reduced, compared to a scenario in which a UWB device configured to perform ranging operations coexists with a separate, dedicated radar device. However, the skilled person will appreciate that the radar device comprised in the presently disclosed system may also be such a dedicated radar device.

Ultra-wideband (UWB) is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e. for determining the distance between communicating devices. Therefore, UWB technology may be used to advantage in various applications, such as automotive applications.

UWB technology - also referred to as impulse-radio ultra-wideband (IR-UWB) - is a RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method.

Because UWB technology has an accurate distance measurement capability, it may be used to advantage in access systems in which the position of devices should be determined to enable access to an object. For instance, a vehicle access system may comprise a user's smart device (e.g., key fob) and another smart device (e.g., an anchor embedded in the vehicle). To enable access to the vehicle, the user's smart device must have a predefined range relative to the other smart device. Therefore, UWB transceivers are typically configured to operate in a ranging mode. In another example, UWB technology may be used for accessing a building or a predefined space within a building.

In the ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). The angle-of-arrival (AoA) mode of operation is similar to the ranging mode, but it involves at least two antennas on one device. In particular, in the AoA mode of operation, two phase values associated with at least two CIRs are calculated on one device. Then, a phase difference of arrival (PDoA) is calculated based on the two-phase values, and an AoA is calculated based on the PDoA. The AoA mode of operation may facilitate a more accurate determination of the position of an object and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation.

In the radar mode of operation, frames are transmitted by at least one device and those frames are received by the same device and/or by one or more other devices. Then, the CIRs are estimated on the device or devices receiving the frames, and the range and/or velocity and/or AoA are calculated based on the estimated CIRs. The radar mode of operation may be used to advantage to detect (i.e., sense) the presence of objects or human beings. However, the radar mode of operation may also be used to estimate a distance, although with a lower accuracy than the ranging mode of operation will typically achieve. The skilled person will appreciate that the given examples are non-limiting examples of how the different modes of operation can be implemented. In other words, the modes may be implemented differently, depending on the requirements imposed by the application, for example.

**Fig. 2** shows an illustrative embodiment of a method 200 for facilitating detecting an external object. The method 200 comprises the following steps. At 202, a controller causes at least one radar device to operate in a first mode in which the radar device transmits a first radar signal for determining one or more communication channel characteristics. Furthermore, at 204 the controller causes the radar device to operate in a second mode in which the radar device transmits a second radar signal, wherein one or more properties of the second radar signal are based on the communication channel characteristics determined when the radar device operates in the first mode. As mentioned above, in this way, the power consumption of the radar device may be reduced.

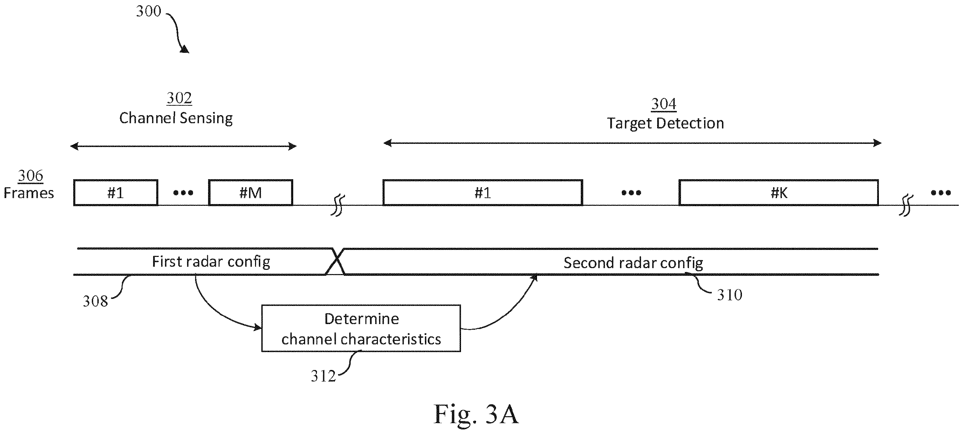

**Fig. 3A** shows an illustrative embodiment of operational phases 300 of a radar-based detection system. In particular, in accordance with the present disclosure the radar device may be caused to operate in a first mode in which the radar device transmits a first radar signal for determining one or more communication channel characteristics. In the example shown in Fig. 3A, the radar device operates in the first mode during a channel sensing phase 302. Furthermore, in accordance with the present disclosure the radar device may be caused to operate in a second mode in which the radar device transmits a second radar signal, wherein one or more properties of the second radar signal are based on the communication channel characteristics determined when the radar device operates in the first mode. In the example shown in Fig. 3A, the radar device operates in the second mode during a target detection phase 304. During the target detection phase 304, the radar device transmits a second radar signal in order to detect an external object (i.e., a target). During the channel sensing phase 302, the radar device transmits the first radar signal, which comprises a plurality of frames 306 (frames 1 to M), applying a first radar configuration 308. Furthermore, during the target detection phase 304, the radar device transmits the second radar signal, which also comprises a plurality of frames 306 (frames 1 to K). The first radar configuration 308 is applied to facilitate determining 312 the communication channel characteristics. Furthermore, the second radar configuration 310 is based on the determined communication channel characteristics.

Initially, the radar device may be operated with a first radar configuration 308 which is optimized for channel sensing. For a radar device using UWB frames or pulses, this configuration 308 may include one or more of the following optimized parameters: an optimized number of frames for transmission (1, ..., M), number of symbols per frame, code sequence for the symbols, pulse shape, pulse repetition rate (e.g., sensing on a low rate), frame duration (e.g., short frames to save power for sensing), transmission power, carrier frequency, receiver performance (e.g. sensitivity, dynamic range handling capability). With this configuration 308 the radar device may transmit the first radar signal and determine multiple channel impulse responses (CIRs) from the received environmental reflections. The CIRs may then be processed to determine 312 channel characteristics, such as a clutter-to-noise ratio, a number of reflections (i.e., peaks in the CIRs), a power level of the strongest reflection (e.g., when a nearby-reflector such as a car bumper is present), and an interference power level (e.g., when a nearby radio transmits an unwanted signal). The channel characteristics may include characteristics on different channel frequencies. Based on the channel characteristics a second radar configuration 310 is determined, which may be used in the target detection phase 304. In the target detection phase 304 the radar device is operated with a second radar configuration 310, which is optimized for the actual detection task in the environment determined during channel sensing. For a kick sensor, for example, the device may be configured to optimally detect a kick towards a rear bumper when it is determined during channel sensing that the car is parked close to other cars or objects (i.e., in case of multiple reflections).

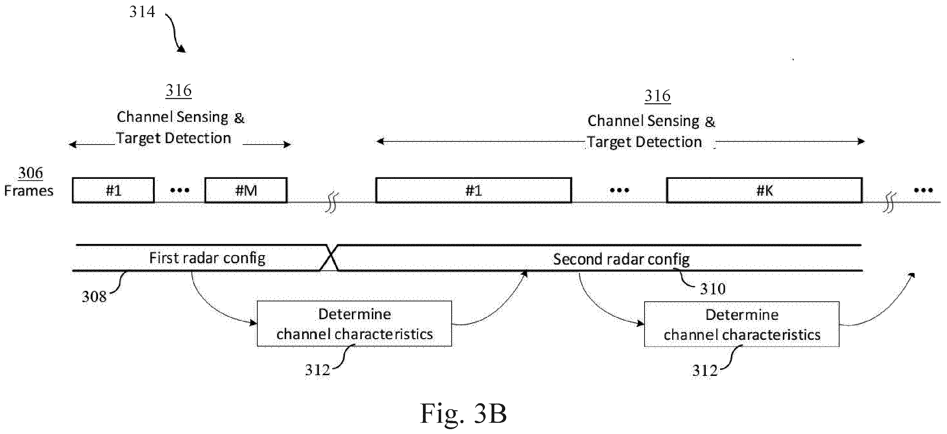

**Fig. 3B** shows another illustrative embodiment of operational phases 314 of a radar-based detection system. In particular, in accordance with the present disclosure the radar device may be caused to operate in a first mode in which the radar device transmits a first radar signal for determining one or more communication channel characteristics. In the example shown in Fig. 3B, the radar device operates in the first mode during each of the consecutive channel sensing and target detection phases 316. Furthermore, in accordance with the present disclosure the radar device may be caused to operate in a second mode in which the radar device transmits a second radar signal, wherein one or more properties of the second radar signal are based on the communication channel characteristics determined when the radar device operates in the first mode. In the example shown in Fig. 3B, the radar device also operates in the second mode during each of the consecutive channel sensing and target detection phases 316. Thus, in this embodiment the modes of operation of the radar device do not have a one-to-one correspondence with the operational phases of the radar-based detection system. Instead, the radar device may transmit a radar signal during each of the consecutive channel sensing and target detection phases 316. This radar signal is used both as a second radar signal for the purpose of detecting a target, and as a first radar signal for determining 312 the communication channel characteristics, which can then be used as input for properly configuring 310 the radar device for the next operational phase. This process may be repeated: during the next operational phase, another radar signal is transmitted, which again is used both as a second radar signal for the purpose of detecting a target and as a first radar signal for determining 312 the communication channel characteristics. Accordingly, it is not necessary to separate a channel sensing phase from a target detection phase: the channel sensing and the target detection may be performed simultaneously using the same transmitted signal and radar configuration.

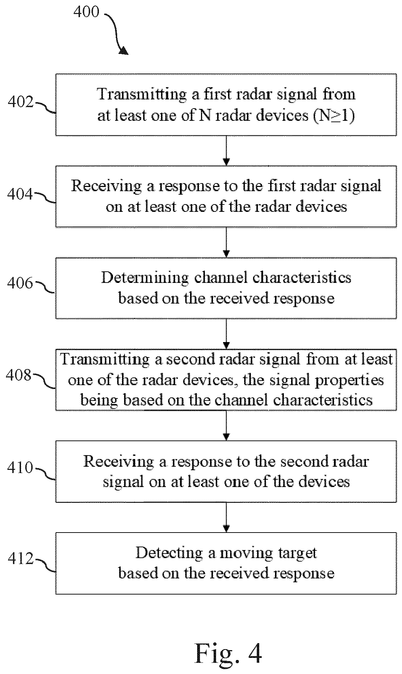

**Fig. 4** shows another illustrative method 400 for facilitating detecting an external object. The method 400 comprises the following steps. At 402, a first radar signal is transmitted from at least one of N radar devices. At 404, a response to the first radar signal is received on at least one of the radar devices. At 406, channel characteristics are determined based on the received response. At 408, a second radar signal is transmitted from at least one of the radar devices, the signal properties being based on the channel characteristics. At 410, a response to the second radar signal is received on at least one of the devices. Finally, at 412, a moving target is detected based on the received response.

More specifically, it is assumed that N radar devices are available, where N is greater than or equal to 1. Thus, the method be applied to a single radar device or to multiple radar devices, to cover both bi-static radar and multi-static radar. A first radar signal is transmitted 402 from at least one of the N devices. This radar signal corresponds to the M frames using a first radar configuration as shown in Fig. 3. After transmission a radar response is received 404 on one, multiple or all devices. The response or responses are used to determine 406 channel characteristics describing the environment, such as those listed previously. In a UWB device, the channel characteristics can be determined from a CIR. Based on the channel characteristics a second radar signal is transmitted 408 from at least one of the devices. This radar signal corresponds to the K frames using a second radar configuration as shown in Fig. 3. After transmission a radar response is received 410 on one, multiple or all devices. The response or responses are used to perform the actual detection 412 of a moving target, such as the kick gesture explained above. Since the second radar signal is optimized for the channel condition seen during target detection, the probability of a correct detection will be increased and the device power consumption will be reduced, compared to a scenario in which a fixed radar configuration is used.

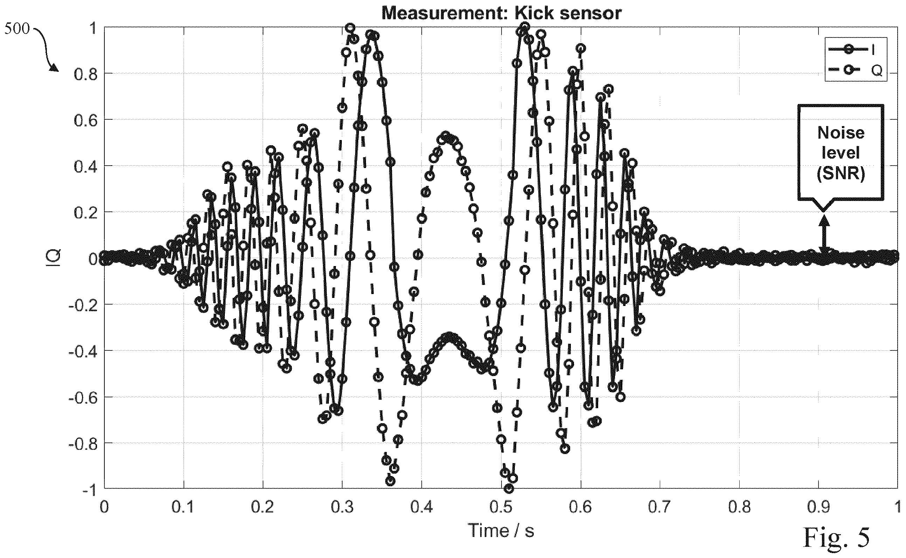

**Fig. 5** shows an illustrative embodiment of a measured IQ signal 500. In particular, it is shown how the environment influences a measured IQ signal of a human kick towards a radar device of the kind set forth. The example is based on a UWB radar attached to the rear bumper of a car. The noise level depends on the channel condition (e.g., clutter from environmental reflections). The noise level or signal-to-noise ratio (SNR) can be measured during a channel sensing mode. Subsequently, the radar configuration can be adapted for the target detection mode, based on the noise level measured during the channel sensing mode.

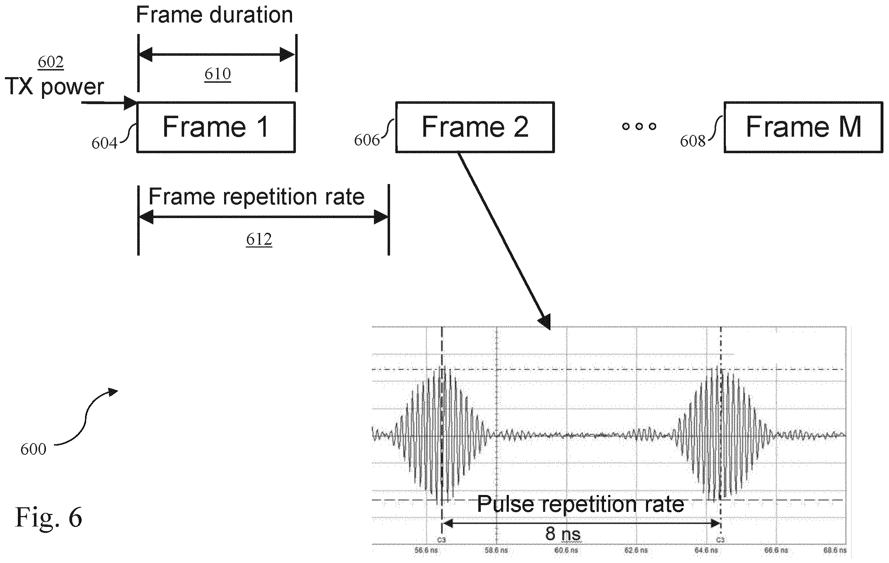

**Fig. 6** shows an illustrative embodiment of radar configuration parameters 600. In particular, a radar configuration is shown which can be optimized for the detection of a human kick, based on a noise level measured during the channel sensing mode. More specifically, the following properties of the radar signal which is transmitted for the detection of the kick can be adjusted in dependence on the measured noise level: the transmission power, the frame duration, the frame repetition rate and the pulse repetition rate. The skilled person will appreciate that other properties may also be adjusted. In case of a low SNR, the following configuration settings may be applied to increase the likelihood that the kick is correctly detected: transmission power = -9 dBm, frame duration = 521 µs, frame repetition rate = 5 ms and pulse repetition rate = 8 ns. In case of a high SNR, the following configuration settings may be applied to increase the likelihood that the kick is correctly detected and the power consumption is reduced: transmission power = -12 dBm, frame duration = 373 µs (i.e., a shorter code) and frame repetition rate = 10 ms.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: system for facilitating detecting an external object
- 102: radar device
- 104: controller
- 200: method for facilitating detecting an external object
- 202: causing, by a controller, at least one radar device to operate in a first mode in which the radar device transmits a first radar signal for determining one or more communication channel characteristics
- 204: causing, by said controller, the radar device to operate in a second mode in which the radar device transmits a second radar signal, wherein one or more properties of the second radar signal are based on the communication channel characteristics determined when the radar device operates in the first mode
- 300: operational phases
- 302: channel sensing
- 304: target detection
- 306: frames
- 308: first radar configuration
- 310: second radar configuration
- 312: determine channel characteristics
- 314: operational phases
- 316: channel sensing and target detection
- 400: method for facilitating detecting an external object
- 402: transmitting a first radar signal from at least one of N radar devices
- 404: receiving a response to the first radar signal on at least one of the radar devices
- 406: determining channel characteristics based on the received response
- 408: transmitting a second radar signal from at least one of the radar devices, the signal properties being based on the channel characteristics
- 410: receiving a response to the second radar signal on at least one of the devices
- 412: detecting a moving target based on the received response
- 500: measured IQ signal
- 600: radar configuration parameters
- 602: transmission power
- 604: frame 1
- 606: frame 2
- 608: frame M
- 610: frame duration
- 612: frame repetition rate

## Claims

1. A system for facilitating detecting an external object, the system comprising:
- at least one radar device configured to transmit one or more radar signals;
- a controller configured to control said radar device;
wherein the controller is configured to cause the radar device to operate in a first mode in which the radar device transmits a first radar signal for determining one or more communication channel characteristics;
wherein the controller is further configured to cause the radar device to operate in a second mode in which the radar device transmits a second radar signal, wherein one or more properties of the second radar signal are based on the communication channel characteristics determined when the radar device operates in the first mode.

2. The system of claim 1, wherein the controller is further configured to optimize a configuration of the radar device when the radar device operates in the first mode, wherein said configuration is optimized for determining the communication channel characteristics.

3. The system of claim 2, wherein optimizing said configuration includes selecting an optimal value of at least one of the following parameters: a number of frames for transmission, a number of symbols per frame, a code sequence for said symbols, a pulse shape, a pulse repetition rate, a frame duration, a transmission power level, a carrier frequency, a receiver performance level.

4. The system of any preceding claim, wherein the controller is configured to determine the communication channel characteristics by analyzing one or more channel impulse responses received by the radar device in response to the transmitted first radar signal.

5. The system of claim 4, wherein the controller is configured to analyze the channel impulse responses to determine at least one of the following communication channel characteristics: a clutter-to-noise ratio, a number of reflections, a power level of the strongest one of said reflections, an interference power level.

6. The system of any preceding claim, wherein the controller is further configured to optimize a configuration of the radar device when the radar device operates in the second mode, wherein said configuration is optimized for detecting the external object.

7. The system of claim 6, wherein optimizing said configuration includes selecting an optimal value of at least one of the following parameters: a transmission power level, a frame duration, a frame repetition rate, a pulse repetition rate, a pulse width.

8. The system of any preceding claim, wherein the controller is configured to perform channel sensing on multiple channel frequencies and to cause the radar device to transmit the second radar signal on a specific one of said channel frequencies, wherein said specific one of the channel frequencies has the most suitable communication channel characteristics for transmitting the second radar signal.

9. The system of any preceding claim, wherein the controller is configured to cause the radar device to operate in the first mode at regular intervals and/or before each attempt to detect the external object.

10. The system of any preceding claim, wherein the radar device is an ultra-wideband communication device configured to operate in a radar mode.

11. A method for facilitating detecting an external object, the method comprising:
- causing, by a controller, at least one radar device to operate in a first mode in which the radar device transmits a first radar signal for determining one or more communication channel characteristics;
- causing, by said controller, the radar device to operate in a second mode in which the radar device transmits a second radar signal, wherein one or more properties of the second radar signal are based on the communication channel characteristics determined when the radar device operates in the first mode.

12. The method of claim 11, wherein the controller optimizes a configuration of the radar device when the radar device operates in the first mode, wherein said configuration is optimized for determining the communication channel characteristics.

13. The method of claim 11 or 12, wherein the controller determines the communication channel characteristics by analyzing one or more channel impulse responses received by the radar device in response to the transmitted first radar signal.

14. The method of any one of claims 11 to 13, wherein the controller optimizes a configuration of the radar device when the radar device operates in the second mode, wherein said configuration is optimized for detecting the external object.

15. A computer program comprising executable instructions which, when executed by a controller, cause said controller to perform the method of any one of claims 11 to 14.

## Amended claims

### Amended claims in accordance with Rule 137(2) EPC.

1. A system for facilitating detecting an external object, the system comprising:
- at least one radar device configured to transmit one or more radar signals;
- a controller configured to control said radar device;
wherein the controller is configured to cause the radar device to operate in a first mode in which the radar device transmits a first radar signal for determining one or more communication channel characteristics indicative of communication channel conditions;
wherein the controller is further configured to cause the radar device to operate in a second mode in which the radar device transmits a second radar signal, wherein one or more properties of the second radar signal are based on the communication channel characteristics determined when the radar device operates in the first mode;
**characterized in that** the properties of the second radar signal include the strength of said second radar signal and **in that** said strength is lower under favorable communication channel conditions than under less favorable communication channel conditions.

2. The system of claim 1, wherein the controller is further configured to optimize a configuration of the radar device when the radar device operates in the first mode, wherein said configuration is optimized for determining the communication channel characteristics.

3. The system of claim 2, wherein optimizing said configuration includes selecting an optimal value of at least one of the following parameters: a number of frames for transmission, a number of symbols per frame, a code sequence for said symbols, a pulse shape, a pulse repetition rate, a frame duration, a transmission power level, a carrier frequency, a receiver performance level.

4. The system of any preceding claim, wherein the controller is configured to determine the communication channel characteristics by analyzing one or more channel impulse responses received by the radar device in response to the transmitted first radar signal.

5. The system of claim 4, wherein the controller is configured to analyze the channel impulse responses to determine at least one of the following communication channel characteristics: a clutter-to-noise ratio, a number of reflections, a power level of the strongest one of said reflections, an interference power level.

6. The system of any preceding claim, wherein the controller is further configured to optimize a configuration of the radar device when the radar device operates in the second mode, wherein said configuration is optimized for detecting the external object.

7. The system of claim 6, wherein optimizing said configuration includes selecting an optimal value of at least one of the following parameters: a transmission power level, a frame duration, a frame repetition rate, a pulse repetition rate, a pulse width.

8. The system of any preceding claim, wherein the controller is configured to perform channel sensing on multiple channel frequencies and to cause the radar device to transmit the second radar signal on a specific one of said channel frequencies, wherein said specific one of the channel frequencies has the most suitable communication channel characteristics for transmitting the second radar signal.

9. The system of any preceding claim, wherein the controller is configured to cause the radar device to operate in the first mode at regular intervals and/or before each attempt to detect the external object.

10. The system of any preceding claim, wherein the radar device is an ultra-wideband communication device configured to operate in a radar mode.

11. A method for facilitating detecting an external object, the method comprising:
- causing, by a controller, at least one radar device to operate in a first mode in which the radar device transmits a first radar signal for determining one or more communication channel characteristics indicative of communication channel conditions;
- causing, by said controller, the radar device to operate in a second mode in which the radar device transmits a second radar signal, wherein one or more properties of the second radar signal are based on the communication channel characteristics determined when the radar device operates in the first mode;
**characterized in that** the properties of the second radar signal include the strength of said second radar signal and **in that** said strength is lower under favorable communication channel conditions than under less favorable communication channel conditions.

12. The method of claim 11, wherein the controller optimizes a configuration of the radar device when the radar device operates in the first mode, wherein said configuration is optimized for determining the communication channel characteristics.

13. The method of claim 11 or 12, wherein the controller determines the communication channel characteristics by analyzing one or more channel impulse responses received by the radar device in response to the transmitted first radar signal.

14. The method of any one of claims 11 to 13, wherein the controller optimizes a configuration of the radar device when the radar device operates in the second mode, wherein said configuration is optimized for detecting the external object.

15. A computer program comprising executable instructions which, when executed by a controller, cause said controller to perform the method of any one of claims 11 to 14.
